(19) Europäisches Patentamt / European Patent Office / Office européen des brevets

(11) **EP 4 567 930 A1**

(12) **EUROPEAN PATENT APPLICATION**
published in accordance with Art. 153(4) EPC

(43) Date of publication:
**11.06.2025 Bulletin 2025/24**

(21) Application number: **24855203.6**

(22) Date of filing: **19.01.2024**

(51) International Patent Classification (IPC):
**H01M 4/38** (2006.01)       **H01M 4/62** (2006.01)
**H01M 10/0525** (2010.01)

(52) Cooperative Patent Classification (CPC):
Y02E 60/10

(86) International application number:
**PCT/CN2024/073311**

(87) International publication number:
**WO 2025/039468 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.08.2023 CN 202311076468**

(71) Applicant: **BTR New Material Group Co., Ltd.
Shenzhen, Guangdong 518106 (CN)**

(72) Inventors:
• **DONG, Hang**
  **Shenzhen, Guangdong 518106 (CN)**
• **XU, Tao**
  **Shenzhen, Guangdong 518106 (CN)**
• **ZHOU, Haihui**
  **Shenzhen, Guangdong 518106 (CN)**
• **HE, Peng**
  **Shenzhen, Guangdong 518106 (CN)**
• **REN, Jianguo**
  **Shenzhen, Guangdong 518106 (CN)**
• **HE, Xueqin**
  **Shenzhen, Guangdong 518106 (CN)**

(74) Representative: **Novagraaf Technologies
Bâtiment O2
2, rue Sarah Bernhardt
CS90017
92665 Asnières-sur-Seine Cedex (FR)**

(54) **NEGATIVE ELECTRODE MATERIAL AND PREPARATION METHOD THEREFOR, AND BATTERY**

(57)    Provided is a negative electrode material and a preparation method thereof, and a battery. The negative electrode material includes a core and a coating layer located on at least partial surface of the core. The core includes graphite, the coating layer includes a carbon material, and a surface of the graphite and/or the coating layer includes nitrogen atoms. Uniformity of a doping concentration of the nitrogen atoms is A, and A≤0.5. According to the negative electrode material provided in the present disclosure, the uniform doping of the nitrogen atoms can adjust an energy band structure of a graphite negative electrode material, promote dynamic transmission, and improve initial coulombic efficiency. Meanwhile, introduction of the nitrogen atoms generates a pseudocapacitance characteristic in a material, thereby improving a lithium storage capacity of the negative electrode material.

FIG. 1

a polymerization reaction is performed on a mixed solution containing graphite, a nitrogen-containing organic monomer, and an oxidant, so as to obtain a precursor — S10

the precursor is carbonized to obtain a negative electrode material — S20

EP 4 567 930 A1

## Description

The present application claims priority to Chinese Patent Application No. 202311076468.4 filed to the China National Intellectual Property Administration on August 24, 2023 and entitled "Negative Electrode Material and Preparation Method Thereof, and Lithium Ion Battery", the disclosure of which is hereby incorporated by reference in its entirety.

## TECHNICAL FIELD

The present disclosure relates to the technical field of negative electrode materials, and specifically, to a negative electrode material and a preparation method thereof, and a battery.

## BACKGROUND

Depending on the advantages of high energy density, absence of memory effect, long cycle life, etc., a lithium ion battery energy storage system has been widely applied in the fields of portable electronic devices, electric vehicle, unmanned aerial vehicles, etc. Current lithium ion batteries still have many performance optimization spaces, the electrochemical performance of the lithium ion batteries is closely related to positive and negative electrode materials, specifically the negative electrode material. The negative electrode material is required to have characteristics of being low in lithium storage potential, high in lithium storage capacity, fast in electronic conduction, etc. Depending on excellent comprehensive electrochemical performance and low price, a graphite negative electrode material becomes the mainstream choice of negative electrode materials for the lithium ion batteries. However, the graphite negative electrode material is required to be further improved on lithium storage capacity, initial coulombic efficiency, etc.

At the current stage, the industry mainly uses a manner of at least partial surface coating to modify spherical natural graphite, thereby constructing a core-shell structure with a graphite core and a soft carbon shell. A direct contact between electrolyte and natural graphite is reduced to reduce side reactions between the graphite and the electrolyte, thereby improving the initial coulombic efficiency and expansion performance of graphite negative electrode. However, these existing solutions do not solve the problem of introduced inhomogeneity of the shell, and inhomogeneous shell thereof or uncoated graphite surfaces reacting in a side-effect manner with the electrolyte, causing the overall initial coulombic efficiency and lithium storage capacity of the material to be still relatively low.

Therefore, how to improve the initial coulombic efficiency of a negative electrode material and increase a lithium storage capacity is still a technical problem in the art.

## SUMMARY

The present disclosure provides a negative electrode material and a preparation method thereof, and a battery, which can promote dynamic transmission, and improve initial coulombic efficiency. Meanwhile, introduction of nitrogen atoms generates a pseudocapacitance characteristic in a material, thereby further improving a lithium storage capacity.

In a first aspect, the present disclosure provides a negative electrode material. The negative electrode material includes a core and a coating layer located on at least partial surface of the core. The negative electrode material is doped with nitrogen atoms.

Uniformity of a doping concentration of the nitrogen atoms is A, and a uniformity A is obtained by the following test method.

5 negative electrode material particles are randomly acquired, n regions are randomly taken from a single negative electrode material particle, energy spectrum signals of nitrogen are respectively detected by a scanning electron microscope energy spectrometer, a proportion of the number of nitrogen atoms in each region is measured, and an average value of the proportions of the number of nitrogen atoms is calculated as R.

The uniformity $A = \sum_{i=1}^{n}(R_n - R)^2/n$ , and A≤0.5, where $R_n$ indicates the proportion of the number of nitrogen atoms measured in a nth region, and n is a natural number ≥5.

In some embodiments, the core includes graphite, the coating layer includes a carbon material, and a surface of the graphite and/or the coating layer includes the nitrogen atoms.

In some embodiments, powder conductivity of the core is $\rho 1$, powder conductivity of the negative electrode material is $\rho 2$, and 1.01≤$\rho 2/\rho 1$≤10.

In some embodiments, the $R_n$ is not equal to zero.

In some embodiments, the core includes at least one of artificial graphite or natural graphite.

In some embodiments, a thickness of the coating layer is 1 nm-100 nm.

In some embodiments, a mass content of nitrogen atoms in the negative electrode material is 0.01%-3%.

In some embodiments, a specific surface area of the negative electrode material is 0.1 m$^2$/g-5 m$^2$/g.

In some embodiments, a median particle size of the negative electrode material is 1 $\mu$m-30 $\mu$m.

In some embodiments, a tap density of the negative electrode material is 0.75 g/cm$^3$-1.1 g/cm$^3$.

In some embodiments, the coating layer includes at least one of hard carbon, soft carbon, or graphite carbon.

In some embodiments, a mass content of the coating layer in the negative electrode material is 0.1%-10%.

In a second aspect, the present disclosure provides a method for preparing a negative electrode material, including the following steps.

A polymerization reaction is performed on a mixed solution containing graphite, a nitrogen-containing organic monomer, and an oxidant, so as to obtain a precursor.

The precursor is carbonized to obtain a negative electrode material.

In some embodiments, the graphite includes at least one of artificial graphite or natural graphite.

In some embodiments, a median particle size of the graphite is 1 $\mu$m-30 $\mu$m.

In some embodiments, the nitrogen-containing organic monomer includes at least one of n-methylaniline, sulfamic acid, aminosalicylic acid, aminoterephthalic acid, aniline, diphenylamine, phenylenediamine, triphenylamine, n-ethylaniline, or nitroaniline.

In some embodiments, the oxidant includes at least one of ammonium persulfate, a hydrogen peroxide solution, ferric chloride, or aluminum chloride.

In some embodiments, a mass concentration of the oxidant in the mixed solution is 0.1 mol/L-2 mol/L.

In some embodiments, a mass ratio of the graphite to the nitrogen-containing organic monomer is 100:(0.1-45).

In some embodiments, a time for the polymerization reaction is 1 h-30 h.

In some embodiments, a temperature for the polymerization reaction is 1°C-95°C.

In some embodiments, the polymerization reaction is performed in a stirring state.

In some embodiments, a nitrogen-containing polymer formed through polymerization of the nitrogen-containing organic monomer is wrapped around a surface of the graphite.

In some embodiments, the step of performing the polymerization reaction on the mixed solution containing the graphite, the nitrogen-containing organic monomer, and the oxidant includes: mixed liquid containing the graphite, a pH regulator, and the nitrogen-containing organic monomer is prepared first, and the oxidant is added to the mixed liquid, so as to obtain the mixed solution.

In some embodiments, pH of the mixed liquid is 1-10.

In some embodiments, the pH regulator includes at least one of an acidic pH reagent or an alkaline pH reagent.

In some embodiments, the pH regulator includes at least one of hydrochloric acid, sulfuric acid, phosphoric acid, or nitric acid.

In some embodiments, the pH regulator includes at least one of lithium hydroxide, sodium hydroxide, potassium hydroxide, sodium carbonate, or sodium bicarbonate.

In some embodiments, carbonization is performed under a protective atmosphere.

In some embodiments, the protective atmosphere includes at least one of nitrogen, helium, neon, argon, krypton, or xenon.

In some embodiments, a carbonization temperature is 500°C-2500°C.

In some embodiments, a heating rate of carbonization is 0.5°C/min-5.0°C/min.

In some embodiments, a temperature-holding time for carbonization is 1 h-20 h.

In a third aspect, the present disclosure provides a battery. The battery includes the above-mentioned negative electrode material or a negative electrode material prepared by the above-mentioned preparation method.

The technical solution of the present disclosure has at least the following beneficial effects.

In the negative electrode material provided in the present disclosure, the negative electrode material includes the core and the coating layer located on at least partial surface of the core. The negative electrode material is doped with the nitrogen atoms. When the uniformity of the doping concentration of the nitrogen atoms is A and A≤0.5, the coating layer is distributed more uniformly and continuously coated on a surface of a graphite material, such that an energy band structure of the graphite material may be effectively uniformly adjusted, thereby promoting dynamic transmission, and improving initial coulombic efficiency; and the introduction of nitrogen atoms in a high uniformity manner generates a pseudocapacitance characteristic in a material, thereby further improving a lithium storage capacity. The uniform doping and modification of the nitrogen atoms can also reduce side reactions between the coating layer and electrolyte, and negative ions in the electrolyte and solvent molecules entering the particles are reduced. Thus, the reversible capacity of the negative electrode material could be improved, and initial coulombic efficiency of the negative electrode material could be improved.

In the method for preparing a negative electrode material provided in the present disclosure, by performing the polymerization reaction on the mixed solution containing the graphite, the nitrogen-containing organic monomer, and the oxidant, the nitrogen-containing polymer formed through polymerization of the nitrogen-containing organic monomer is wrapped around a surface of the graphite, and the negative electrode material in which nitrogen is uniformly doped is obtained by carbonizing the nitrogen-containing polymer. The in situ polymerization reaction is used to uniformly introduce nitrogen-containing organic monomer molecules into surfaces of graphite particles, such that the uniformity of nitrogen doping on the surfaces of the graphite particles may be improved, and the method is simple in preparation process and easy to realize industrial preparation. The negative electrode material prepared is uniform in surface coating, nitrogen doping is also uniform, and the specific surface area of the material is controlled within an appropriate range, such that an irreversible reaction between the negative electrode material and the electrolyte in a first cycle process is reduced; the uniform doping of the nitrogen atoms can also adjust the energy band structure of the graphite material, thereby promoting dynamic transmission, and improving initial coulombic efficiency; and the introduction of the nitrogen atoms generates a pseudocapacitance characteristic in a material, thereby further improving a lithium storage capacity.

BRIEF DESCRIPTION OF THE DRAWINGS

FIG. 1 shows a process flowchart of a method for preparing a negative electrode material according to the present disclosure.

FIG. 2a and FIG. 2b show scanning electron micrography diagrams of a negative electrode material at different magnification ratios according to Example 1 of the present disclosure.

FIG. 3 shows a schematic testing diagram of doping concentrations of nitrogen in different regions in a scanning electron micrography diagram of a negative electrode material according to Example 2 of the present disclosure.

DETAILED DESCRIPTION OF EMBODIMENTS

In order to better describe the present disclosure and to facilitate the understanding of the technical solutions of the present disclosure, the present disclosure is further described in detail below. However, the following embodiments are only simple embodiments of the present disclosure and do not represent or limit the scope of protection of the claims of the present disclosure, and the scope of protection of the present disclosure is subject to the claims.

At the current stage, the industry mainly uses a manner of surface coating to modify graphite, thereby constructing a core-shell structure with a graphite core and a soft carbon shell. A direct contact between electrolyte and graphite is reduced, so as to reduce side reactions between the graphite and the electrolyte. At present, a graphite negative electrode material is required to be further improved on lithium storage capacity, initial coulombic efficiency, etc. Heterogeneous nitrogen doping is one of effective methods for improving the lithium storage performance of the graphite negative electrode material.

Current main processes are to perform nitrogen doping on the graphite, for example, the graphite may be oxidized to obtain expanded graphite, and then further subjected to a high temperature solid-state reaction with water vapor of nitrogen-containing compound molecules, such that nitrogen doping of the graphite is realized. The uniformity of nitrogen doping in such graphite material is poor, and some show a phenomenon of a decreasing doping concentration gradient with a high surface doping concentration and a low internal doping concentration. Nitrogen doped in these graphite materials is not uniform, causing the surfaces of part of the graphite to be not coated with the nitrogen, the graphite and the electrolyte are prone to side reactions. Even if the graphite is coated, the problem of non-uniform nitrogen doping is still difficult to improve, causing the overall initial coulombic efficiency and lithium storage capacity of the negative electrode material to be still relatively low.

Based on this, in a first aspect, the present disclosure provides a negative electrode material. The negative electrode material includes a core and a coating layer located on at least partial surface of the core. The negative electrode material is doped with nitrogen atoms. Uniformity of a doping concentration of the nitrogen atoms is A, and A≤0.5.

In the negative electrode material provided in the present disclosure, the negative electrode material includes the core and the coating layer located on at least partial surface of the core. The negative electrode material is doped with the nitrogen atoms. When the uniformity of the doping concentration of the nitrogen atoms is A and A≤0.5, the coating layer is more uniformly and continuously coated on a surface of a graphite material, such that an energy band structure of the graphite material may be effectively uniformly adjusted, thereby promoting dynamic transmission, and improving initial coulombic efficiency; and the introduction of nitrogen atoms in a high uniformity manner generates a pseudocapacitance characteristic in a material, thereby further improving a lithium storage capacity. The uniform doping and modification of the nitrogen atoms can also reduce side reactions between the coating layer and electrolyte, and negative ions in the electrolyte and solvent molecules entering the particles are reduced. Thus, the reversible capacity of the negative electrode material could be improved, and initial coulombic efficiency of the negative electrode material could be improved.

5 negative electrode material particles are randomly acquired, n regions are randomly taken from a single negative electrode material particle, energy spectrum signals of nitrogen are respectively detected by a scanning electron microscope energy spectrometer, a proportion of the number of nitrogen atoms in each region is measured, and an average value of the proportions of the number of nitrogen atoms is calculated as R.

The uniformity $A = \sum_{i=1}^{n} (R_n - R)^2/n$ , and A≤0.5, where $R_n$ indicates the proportion of the number of nitrogen atoms measured in a nth region, and n is a natural number ≥5.

An energy spectrometer is used to analyze types and contents of elements in micro area compositions of the negative electrode material, the nitrogen atoms in each region are quantified by cooperating with a scanning electron microscope, and the doping uniformity of the nitrogen atoms on the negative electrode material is indirectly reflected by the variance of $R_n$-R at a plurality of positions. Therefore, the uniformity A is defined by detecting the energy spectrum signal of the nitrogen through an energy spectrum test, so as to indicate the uniformity of the nitrogen atoms on the negative electrode material.

In some embodiments, $R_n$ indicates the proportion of the number of nitrogen atoms measured in a nth region, and $R_n$ is not equal to zero. It may be understood that, the proportions of the number of nitrogen atoms in each of n unit regions randomly selected are all not equal to zero, such that the uniformity of nitrogen doping may be improved, and the coating layer is more uniform, more facilitating comprehensive improvement of the capacity and initial coulombic efficiency of the negative electrode material.

Specifically, the uniformity A of the doping concentration of the nitrogen atoms may be 0.01, 0.05, 0.1, 0.12, 0.15, 0.16, 0.18, 0.2, 0.4, 0.5, etc., which is not limited herein. In some embodiments, the graphite includes at least one of artificial graphite or natural graphite.

In some embodiments, the core includes graphite, the coating layer includes a carbon material, and a surface of the graphite and/or the coating layer includes the nitrogen atoms.

The natural graphite is flake graphite, which is a natural phanerocrystalline graphite. It is in a fish scale like shape, belongs to a hexagonal system, featuring a layered structure, and has good performance of resistance to high temperature, conductivity, thermal conductivity, lubrication, plasticity, and acid and alkali resistance.

The artificial graphite is a graphite material that is obtained by carbonizing an organic compound and then performing graphitization high-temperature treatment.

In some embodiments, the graphite includes spherical graphite, and the spherical graphite is the natural graphite.

In some embodiments, a median particle size of the graphite is 1 μm-30 μm, which may specifically be 1 μm, 5 μm, 8 μm, 10 μm, 11 μm, 13 μm, 16 μm, 18 μm, 20 μm, 23 μm, 26 μm, 30 μm, etc., but is not only limited to the enumerated values, and other values not enumerated within the value range are also applicable. Through multiple tests, it was found that, by controlling the median particle size of the graphite within the above range, a specific surface area of the graphite is reduced, and a contact between the graphite and electrolyte is reduced, thereby inhibiting the occurrence of side reactions. Preferably, the median particle size of the graphite is 5 μm-20 μm.

In some embodiments, a mass content of carbon in the graphite is ≥95%, which may specifically be 95%, 96%, 97%, 97.5%, 98.3%, 98.8%, 99%, etc., but is not only limited to the enumerated values, and other values not enumerated within the value range are also applicable. Preferably, the mass content of carbon in the graphite is ≥99%.

In some embodiments, a thickness of the coating layer is 1 nm-100 nm, which may specifically be 1 nm, 5 nm, 10 nm, 20 nm, 30 nm, 40 nm, 50 nm, 60 nm, 70 nm, 80 nm, 100 nm, etc., but is not only limited to the enumerated values, and other values not enumerated within the value range are also applicable.

In some embodiments, the coating layer includes a carbon material, and the carbon material includes at least one of hard carbon, soft carbon, or graphite carbon. The coating layer has good compatibility with the electrolyte, thereby ensuring the stability of the electrical property of the negative electrode material during charging and discharging. Exemplarily, the carbon material in the coating layer may be derived from at least one of polymers such as petroleum asphalt, coal tar pitch, modified pitch, mesophase pitch, resin, cross-linked polymer, which is formed through carbonization.

In some embodiments, a mass content of the nitrogen atoms in the negative electrode material is 0.01%-3%, which may specifically be 0.01%, 0.05%, 0.1%, 0.5%, 0.7%, 0.8%, 1%, 2%, 3%, etc., but is not only limited to the enumerated values, and other values not enumerated within the value range are also applicable.

In some embodiments, powder conductivity of the graphite is ρ1, powder conductivity of the negative electrode material is ρ2, and 1.01≤ρ2/ρ1≤10. It is to be noted that, the graphite is powder conductivity of a graphite raw material that is not coated and doped, and the powder conductivity of the negative electrode material refers to conductivity of the graphite that is coated with the coating layer and subjected to nitrogen doping.

In some embodiments, the specific surface area of the negative electrode material is 0.1 m²/g-5 m²/g, which may specifically be 0.1 m²/g, 0.3 m²/g, 0.5 m²/g, 1.0 m²/g, 1.8 m²/g, 2.6 m²/g, 3.5 m²/g, 5.0 m²/g, or may definitely be other numbers within the above range, and is not limited herein. Through a plurality of experiments, the applicant found that, by controlling the specific surface area of the negative electrode material within the above range, the cycling performance of a lithium ion battery prepared by the negative electrode material is improved.

In some embodiments, a median particle size of the negative electrode material is 1 μm-30 μm, which may

specifically be 1 $\mu$m, 3 $\mu$m, 6 $\mu$m, 8 $\mu$m, 9 $\mu$m, 10 $\mu$m, 12 $\mu$m, 14 $\mu$m, 15 $\mu$m, 17 $\mu$m, 20 $\mu$m, 22 $\mu$m, 25 $\mu$m, 30 $\mu$m, etc., but is not only limited to the enumerated values, and other values not enumerated within the value range are also applicable.

In some embodiments, a tap density of the negative electrode material is 0.75 $g/cm^3$-1.1 $g/cm^3$, which may specifically be 0.75 $g/cm^3$, 0.8 $g/cm^3$, 0.85 $g/cm^3$, 0.9 $g/cm^3$, 0.92 $g/cm^3$, 1.0 $g/cm^3$, 1.02 $g/cm^3$, 1.05 $g/cm^3$, 1.1 $g/cm^3$, or may definitely be other numbers within the above range, and is not limited herein. Through a plurality of experiments, the applicant found that, by controlling the tap density of the negative electrode material within the above range, an energy density of the lithium ion battery prepared by the negative electrode material is improved.

In some embodiments, the negative electrode material includes amorphous carbon. A mass content of the amorphous carbon is 0.1%-10%, which may specifically be 0.1%, 0.5%, 1%, 1.5%, 3%, 3.5%, 4%, 6%, 8%, 10%, etc., and is not limited herein.

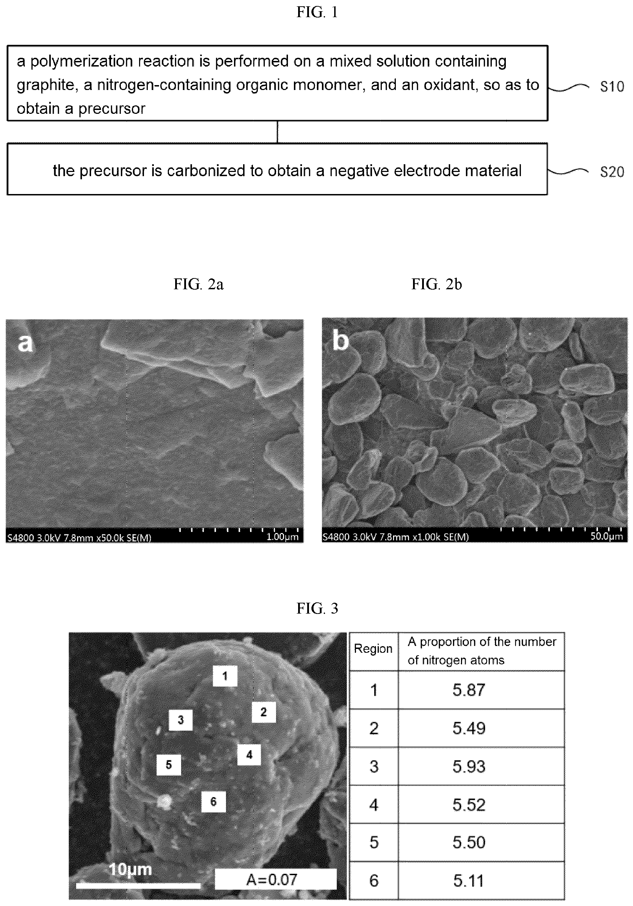

In a second aspect, the present disclosure provides a method for preparing a negative electrode material. As shown in FIG. 1, the method includes the following steps.

At S10, a polymerization reaction is performed on a mixed solution containing graphite, a nitrogen-containing organic monomer, and an oxidant, so as to obtain a precursor.

At S20, the precursor is carbonized to obtain a negative electrode material.

In the method for preparing a composite negative electrode material provided in the present disclosure, by performing the polymerization reaction on the mixed solution containing the graphite, the nitrogen-containing organic monomer, and the oxidant, the nitrogen-containing polymer formed through polymerization of the nitrogen-containing organic monomer is wrapped around a surface of the graphite, and the negative electrode material in which nitrogen is uniformly doped is obtained by carbonizing the nitrogen-containing polymer. The in situ liquid-phase oxidation-reduction reaction is used to uniformly introduce nitrogen-containing organic monomer molecules into surfaces of graphite particles, such that the uniformity of nitrogen doping on the surfaces of the graphite particles may be improved, and the method is simple in preparation process and easy to realize industrial preparation. The negative electrode material prepared is uniform in surface coating, nitrogen doping is also uniform, and the specific surface area of the negative electrode material is controlled within an appropriate range, such that an irreversible reaction between the negative electrode material and the electrolyte in a first cycle process is reduced; the uniform doping of the nitrogen atoms can also adjust the energy band structure of the graphite material, thereby promoting dynamic transmission, and improving initial coulombic efficiency; and the introduction of the nitrogen atoms generates a pseudocapacitance characteristic in the negative electrode material, thereby further improving a lithium storage capacity.

The preparation method provided in this solution is introduced below in detail.

At S10, the polymerization reaction is performed on the mixed solution containing the graphite, the nitrogen-containing organic monomer, and the oxidant, so as to obtain the precursor.

In some embodiments, S10 includes: mixed liquid containing the graphite, a pH regulator, and the nitrogen-containing organic monomer is prepared first, and the oxidant is added to the mixed liquid, so as to obtain the mixed solution.

In some embodiments, the graphite includes at least one of artificial graphite or natural graphite.

The natural graphite is flake graphite, which is a natural phanerocrystalline graphite. It is in a fish scale like shape, belongs to a hexagonal system, featuring a layered structure, and has good performance of resistance to high temperature, conductivity, thermal conductivity, lubrication, plasticity, and acid and alkali resistance.

The artificial graphite is a graphite material that is obtained by carbonizing an organic compound and then performing graphitization high-temperature treatment.

In some embodiments, the graphite includes spherical graphite, and the spherical graphite is the natural graphite.

In some embodiments, a median particle size of the graphite is 1 $\mu$m-30 $\mu$m, which may specifically be 1 $\mu$m, 5 $\mu$m, 8 $\mu$m, 10 $\mu$m, 11 $\mu$m, 13 $\mu$m, 16 $\mu$m, 18 $\mu$m, 20 $\mu$m, 23 $\mu$m, 26 $\mu$m, 30 $\mu$m, etc., but is not only limited to the enumerated values, and other values not enumerated within the value range are also applicable. Through multiple tests, it was found that, by controlling the median particle size of the graphite within the above range, a specific surface area of the graphite is reduced, and a contact between the graphite and electrolyte is reduced, thereby inhibiting the occurrence of side reactions. Preferably, the median particle size of the graphite is 5 $\mu$m-20 $\mu$m.

In some embodiments, a mass content of carbon in the graphite is ≥95%, which may specifically be 95%, 96%, 97%, 97.5%, 98.3%, 98.8%, 99%, etc., but is not only limited to the enumerated values, and other values not enumerated within the value range are also applicable. Preferably, the mass content of carbon in the graphite is ≥99%.

In some embodiments, pH of the mixed liquid is 1-10, which may specifically be 1, 2, 3, 4, 5, 6, 7, 7, 8, 9, 10, etc., or may be other values within the above range, and is not limited herein.

In some embodiments, the pH regulator includes at least one of an acidic chemical reagent or an alkaline chemical reagent. Specifically, the acidic pH regulator used may be at least one of hydrochloric acid, sulfuric acid, phosphoric acid, or nitric acid; and the alkaline pH regulator used may be at least one of lithium hydroxide, sodium hydroxide, potassium hydroxide, sodium carbonate, or sodium bicarbonate. It is to be noted that, a PH value of the mixed liquid here is regulated according to polymerization reaction environments required by different nitrogen-containing organic monomers.

The mixed solution further includes a solvent. The solvent may be water, an alcoholic organic solvent, or the like, which may specifically be water, methanol, ethanol, n-propanol, isopropanol, tert-butanol, and is not limited herein, as long as the solvent can dissolve the nitrogen-containing organic monomer and the oxidant.

In some embodiments, the nitrogen-containing organic monomer includes at least one of n-methylaniline, sulfamic acid, aminosalicylic acid, aminoterephthalic acid, aniline, diphenylamine, phenylenediamine, triphenylamine, n-ethylaniline, or nitroaniline, which is not limited herein. Other nitrogen-containing organic monomers may all be used in the present disclosure. It may be understood that, the nitrogen-containing organic monomer can undergo the in situ polymerization reaction in a suitable environment, so as to form the nitrogen-containing polymer, and the nitrogen-containing polymer is cross-linked in three dimensions and coated on the surfaces of the graphite particles.

In some embodiments, a mass ratio of the graphite to the nitrogen-containing organic monomer is 100:(0.1-45), which may specifically be 100:0.1, 100:1, 100:5, 100:8, 100:10, 100:15, 100:25, 100:35, 100:45, etc., but is not only limited to the enumerated values, and other values not enumerated within the value range are also applicable. By controlling the mass ratio of the graphite raw material to the nitrogen-containing organic monomer, the situation that the coating layer of the polymer is too thick to affect a capacity may be reduced. If there are too few polymers, a complete polymer coating layer cannot be formed, thus affecting the doping uniformity of the nitrogen atoms. In the present disclosure, by controlling the mass ratio of the graphite to the nitrogen-containing organic monomer, it may ensure that the uniform polymer coating layer is formed on the surfaces of the graphite particles, thereby improving the doping uniformity of the nitrogen atoms of the graphite particles.

In some embodiments, the oxidant includes at least one of ammonium persulfate, a hydrogen peroxide solution, ferric chloride, or aluminum chloride. It may be understood that, the addition of the oxidant may promote the polymerization reaction of the nitrogen-containing organic monomer.

In some embodiments, a mass concentration of the oxidant in the mixed solution is 0.1 mol/L-2 mol/L, which may specifically be 0.1 mol/L, 0.3 mol/L, 0.5 mol/L, 0.8 mol/L, 1.1 mol/L, 1.3 mol/L, 1.5 mol/L, 1.7 mol/L, 2 mol/L, but is not only limited to the enumerated values, and other values not enumerated within the value range are also applicable.

In some embodiments, a time for the polymerization reaction is 1 h-30 h, which may specifically be 1 h, 5 h, 8 h, 10 h, 15 h, 18 h, 20 h, 23 h, 26 h, 30 h, etc.

In some embodiments, a temperature for the polymerization reaction is 1°C-95°C, which may specifically be 1°C, 6°C, 10°C, 14°C, 20°C, 26°C, 32°C, 40°C, 46°C, 50°C, 75°C, 80°C, 95°C, etc., and is not limited herein.

In some embodiments, the polymerization reaction is performed in a stirring state. The nitrogen-containing polymer formed through polymerization of the nitrogen-containing organic monomer is wrapped around the surface of the graphite.

In the present disclosure, by controlling the temperature and time for the polymerization reaction, the addition of the oxidant added, etc., the nitrogen-containing organic monomer can be promoted to undergo a full polymerization reaction, and in the stirring state, the nitrogen-containing polymer formed through polymerization can be more uniformly wrapped around the surface of the graphite.

In some embodiments, a stirring rate is 50 r/min-800 r/min, which may specifically be 50 r/min, 100 r/min, 150 r/min, 200 r/min, 250 r/min, 300 r/min, 400 r/min, 500 r/min, 700 r/min, 800 r/min, etc., but is not only limited to the enumerated values, and other values not enumerated within the value range are also applicable. By controlling the stirring rate within the above range, the nitrogen-containing polymer generated by the polymerization reaction is more uniformly wrapped around the surface of the graphite.

At S20, the precursor is carbonized under a protective atmosphere, so as to obtain the negative electrode material.

In some embodiments, a carbonization temperature is 500°C-2500°C, which may specifically be 500°C, 600°C, 650°C, 800°C, 1000°C, 1300°C, 1500°C, 2000°C, 2200°C, 2500°C, etc., but is not limited to enumerated numerical values, and other numerical values not enumerated within the numerical value range are equally applicable. It may be understood that, by controlling the carbonization temperature within a suitable range, thermal decomposition of the polymer due to too high temperature can be reduced, and insufficient polymer carbonization due to too low temperature is reduced. The full carbonization of the coating layer of the polymer can reduce product impedance, such that the nitrogen atoms can be doped inward from the surfaces of the negative electrode material particles, thereby improving the uniformity of nitrogen doping at the surface layer of the negative electrode material particles. Preferably, a reaction temperature for carbonization is 800°C-2200°C.

In some embodiments, a holding time for carbonization is 1 h-20 h, which may specifically be 1 h, 3 h, 7 h, 10 h, 11 h, 13 h, 16 h, 17 h, 18 h, 20 h, etc., but is not limited to enumerated numerical values, and other numerical values not enumerated within the numerical value range are equally applicable.

In some embodiments, carbonization is performed under a protective atmosphere. The protective atmosphere includes at least one of nitrogen, helium, neon, argon, krypton, or xenon.

In some embodiments, a heating rate of carbonization is 0.5°C/min-5.0°C/min, which may specifically be 0.5°C/min, 1°C/min, 1.7°C/min, 2.5°C/min, 3.0°C/min, 4°C/min, 5°C/min, etc., but is not only limited to the enumerated values, and other values not enumerated within the value range are also applicable.

In a third aspect, the present disclosure provides a battery. The battery includes the negative electrode material of the first aspect or a negative electrode material prepared by the preparation method of the second aspect.

In some other embodiments, the negative electrode material may be applied to a lithium ion battery, or may also be applied to other electrochemical apparatuses such as a sodium ion battery.

It will be understood by those skilled in the art that the method for preparing a lithium ion battery described above is only embodiments. Other methods commonly used in the art may be used without departing from the contents disclosed in the present disclosure.

The examples of the present disclosure are further described below with a plurality of examples. The examples of the present disclosure are not limited to the following specific examples. Changes may be implemented appropriately within the scope of protection.

Example 1

A method for preparing a negative electrode material in this example included the following steps.

(1) 500 g of graphite and 1000 ml of deionized water were uniformly mixed, a phosphoric acid solution was added to regulate a pH value to 5, 25 g of an aniline monomer was added, and then full stirring was well performed to form a mixed solution.

(2) The mixed solution was placed under a 4°C water bath condition and stirred, a stirring rate was controlled at 300 r/min, 60 ml of an ammonium persulfate aqueous solution (a concentration was 2 mol/L) was added at the same time, continuous stirring was performed for 10 h after the reaction ended, so as to perform a polymerization reaction, and a precursor was obtained through solid-liquid separation.

(3) Under a nitrogen atmosphere, the precursor was heated to 1150°C, and then carbonized for 4 hours, so as to obtain a negative electrode material.

The negative electrode material prepared in this example included a core and a coating layer located on at least partial surface of the core. The core included graphite, a graphite surface and the coating layer contained nitrogen atoms, and the coating layer included hard carbon. FIG. 2a was a scanning electron micrography diagram of the negative electrode material prepared in Example 1. FIG. 2b was a scanning electron micrography diagram of the negative electrode material prepared in Example 1 at another magnification ratio. As shown in FIG. 2a and FIG. 2b, the negative electrode material prepared in Example 1 was integrally smooth in particle surface.

5 negative electrode material particles were randomly acquired, 6 regions were randomly taken from the single negative electrode material particle, energy spectrum signals of nitrogen were respectively detected by a scanning electron microscope energy spectrometer, a proportion $R_n$ of the number of nitrogen atoms in each region was measured, and $R_1$-$R_6$ were all not equal to 0.

Example 2

A method for preparing a negative electrode material in this example included the following steps.

(1) 500 g of graphite and 1000 ml of deionized water were uniformly mixed, a phosphoric acid solution was added to regulate a pH value to 5, 40 g of a phenylenediamine monomer was added, and then full stirring was well performed to form a mixed solution.

(2) The mixed solution was placed under a 4°C water bath condition and stirred, a stirring rate was controlled at 500 r/min, 150 ml of an ammonium persulfate aqueous solution (a concentration was 2 mol/L) was added at the same time, continuous stirring was performed for 10 h after the reaction ended, so as to perform a polymerization reaction, and a precursor was obtained through solid-liquid separation.

(3) Under a nitrogen atmosphere, the precursor was heated to 1250°C, and then carbonized for 4 hours, so as to obtain a negative electrode material.

The negative electrode material prepared in this example included a core and a coating layer located on at least partial surface of the core. The core included graphite, a graphite surface and the coating layer contained nitrogen atoms, and the coating layer included hard carbon. FIG. 3 is a schematic testing diagram of doping concentrations of nitrogen in different regions in a scanning electron micrography diagram of a negative electrode material according to Example 2 of the present disclosure.

As shown in FIG. 3, 5 negative electrode material particles were randomly acquired, 6 regions were randomly taken from the single negative electrode material particle, energy spectrum signals of nitrogen were respectively detected by a scanning electron microscope energy spectrometer, a proportion $R_n$ of the number of nitrogen atoms in each region was measured, and $R_1$-$R_6$ were all not equal to 0. An average value of the proportions of the number of nitrogen atoms was calculated as R=0.07, indicating that the negative electrode material might realize the uniform doping of nitrogen.

Example 3

(1) 500 g of graphite and 1000 ml of deionized water were uniformly mixed, a phosphoric acid solution was added to regulate a pH value to 5, 50 g of an aniline monomer was added, and then full stirring was well performed to form a mixed solution.

(2) The mixed solution was placed under a 4°C water bath condition and stirred, a stirring rate was controlled at 400 r/min, 120 ml of an ammonium persulfate aqueous solution (a concentration was 2 mol/L) was added at the same time, continuous stirring was performed for 15 h after the reaction ended, so as to perform a polymerization reaction, and a precursor was obtained through solid-liquid separation.

(3) Under a nitrogen atmosphere, the precursor was heated to 1150°C, and then carbonized for 4 hours, so as to obtain a negative electrode material.

The negative electrode material prepared in this example included a core and a coating layer located on at least partial surface of the core. The core included graphite, a graphite surface and the coating layer contained nitrogen atoms, and the coating layer included hard carbon.

5 negative electrode material particles were randomly acquired, 10 regions were randomly taken from the single negative electrode material particle, energy spectrum signals of nitrogen were respectively detected by a scanning electron microscope energy spectrometer, a proportion $R_n$ of the number of nitrogen atoms in each region was measured, and $R_1$-$R_6$ were all not equal to 0.

Example 4

A difference between this example and Example 1 lied in that,

(1) 500 g of artificial graphite and 1000 ml of deionized water were uniformly mixed, a hydrochloric acid solution was added to regulate a pH value to 5, 15 g of an aniline monomer was added, and then full stirring was well performed to form a mixed solution.

The negative electrode material prepared in this example included a core and a coating layer located on at least partial surface of the core. The core included graphite, a graphite surface and the coating layer contained nitrogen atoms, and the coating layer included hard carbon.

5 negative electrode material particles were randomly acquired, 10 regions were randomly taken from the single negative electrode material particle, energy spectrum signals of nitrogen were respectively detected by a scanning electron microscope energy spectrometer, a proportion $R_n$ of the number of nitrogen atoms in each region was measured, and $R_1$-$R_6$ were all not equal to 0.

Example 5

(1) 500 g of natural graphite and 1000 ml of deionized water were uniformly mixed, a sodium hydroxide solution was added to regulate a pH value to 8, 20 g of an sulfamic acid monomer was added, and then full stirring was well performed to form a mixed solution.

(2) The mixed solution was placed under a 4°C water bath condition and stirred, a stirring rate was controlled at 300 r/min, 50 ml of an ammonium persulfate aqueous solution (a concentration was 2 mol/L) was added at the same time, continuous stirring was performed for 10 h after the reaction ended, so as to perform a polymerization reaction, and a precursor was obtained through solid-liquid separation.

(3) Under a nitrogen atmosphere, the precursor was heated to 1150°C, and then carbonized for 4 hours, so as to obtain a negative electrode material.

The negative electrode material prepared in this example included a core and a coating layer located on at least partial surface of the core. The core included graphite, a graphite surface and the coating layer contained nitrogen atoms, and the coating layer included soft carbon.

5 negative electrode material particles were randomly acquired, 10 regions were randomly taken from the single negative electrode material particle, energy spectrum signals of nitrogen were respectively detected by a scanning electron microscope energy spectrometer, a proportion $R_n$ of the number of nitrogen atoms in each region was measured, and $R_1$-$R_6$ were all not equal to 0.

Example 6

(1) 500 g of artificial graphite (D50=2$\mu$m) and 1000 ml of deionized water were uniformly mixed, a sodium hydroxide solution was added to regulate a pH value to 4, 25 g of an aniline monomer was added, and then full stirring was well performed to form a mixed solution.

(2) The mixed solution was placed under a 4°C water bath condition and stirred, a stirring rate was controlled at 300 r/min, 50 ml of an ammonium persulfate aqueous solution (a concentration was 2 mol/L) was added at the same time, continuous stirring was performed for 10 h after the reaction ended, so as to perform a polymerization reaction, and a precursor was obtained through solid-liquid separation.

(3) Under an argon atmosphere, the precursor was heated to 1250°C, and then carbonized for 4 hours, so as to obtain a negative electrode material.

The negative electrode material prepared in this example included a core and a coating layer located on at least partial surface of the core. The core included graphite, a graphite surface and the coating layer contained nitrogen atoms, and the coating layer included hard carbon.

5 negative electrode material particles were randomly acquired, 10 regions were randomly taken from the single negative electrode material particle, energy spectrum signals of nitrogen were respectively detected by a scanning electron microscope energy spectrometer, a proportion $R_n$ of the number of nitrogen atoms in each region was measured, and $R_1$-$R_6$ were all not equal to 0.

Example 7

(1) 500 g of artificial graphite (D50=25$\mu$m) and 1000 ml of deionized water were uniformly mixed, a sodium hydroxide solution was added to regulate a pH value to 4, 25 g of an aniline monomer was added, and then full stirring was well performed to form a mixed solution.

(2) The mixed solution was placed under a 4°C water bath condition and stirred, a stirring rate was controlled at 300 r/min, 50 ml of an ammonium persulfate aqueous solution (a concentration was 2 mol/L) was added at the same time, continuous stirring was performed for 10 h after the reaction ended, so as to perform a polymerization reaction, and a precursor was obtained through solid-liquid separation.

(3) Under an argon atmosphere, the precursor was heated to 1250°C, and then carbonized for 4 hours, so as to obtain a negative electrode material.

The negative electrode material prepared in this example included a core and a coating layer located on at least partial surface of the core. The core included graphite, a graphite surface and the coating layer contained nitrogen atoms, and the coating layer included hard carbon.

5 negative electrode material particles were randomly acquired, 10 regions were randomly taken from the single negative electrode material particle, energy spectrum signals of nitrogen were respectively detected by a scanning electron microscope energy spectrometer, a proportion $R_n$ of the number of nitrogen atoms in each region was measured, and $R_1$-$R_6$ were all not equal to 0.

Example 8

A difference between Example 8 and Example 1 lied in that,

(1) 500 g of graphite and 1000 ml of deionized water were uniformly mixed, a phosphoric acid solution was added to regulate a pH value to 5, 0.5 g of an aniline monomer was added, and then full stirring was well performed to form a mixed solution.

The negative electrode material prepared in this example included a core and a coating layer located on at least partial surface of the core. The core included graphite, a graphite surface and the coating layer contained nitrogen atoms, and the coating layer included hard carbon.

5 negative electrode material particles were randomly acquired, 6 regions were randomly taken from the single negative electrode material particle, energy spectrum signals of nitrogen were respectively detected by a scanning electron microscope energy spectrometer, a proportion $R_n$ of the number of nitrogen atoms in each region was measured, and $R_1$-$R_6$ were all not equal to 0.

Example 9

A difference between Example 9 and Example 1 lied in that,

(1) 500 g of graphite and 1000 ml of deionized water were uniformly mixed, a phosphoric acid solution was added to regulate a pH value to 5, 225 g of an aniline monomer was added, and then full stirring was well performed to form a mixed solution.

The negative electrode material prepared in this example included a core and a coating layer located on at least partial surface of the core. The core included graphite, a graphite surface and the coating layer contained nitrogen atoms, and the coating layer included hard carbon.

5 negative electrode material particles were randomly acquired, 6 regions were randomly taken from the single negative electrode material particle, energy spectrum signals of nitrogen were respectively detected by a scanning electron microscope energy spectrometer, a proportion $R_n$ of the number of nitrogen atoms in each region was measured, and $R_1$-$R_6$ were all not equal to 0.

Example 10

A difference between Example 10 and Example 1 lied in that, a water bath temperature was 25°C, and other components, use amounts, and preparation methods were the same as Example 1.

The negative electrode material prepared in this example included a core and a coating layer located on at least partial surface of the core. The core included graphite, a graphite surface and the coating layer contained nitrogen atoms, and the coating layer included hard carbon.

5 negative electrode material particles were randomly acquired, 6 regions were randomly taken from the single negative electrode material particle, energy spectrum signals of nitrogen were respectively detected by a scanning electron microscope energy spectrometer, a proportion $R_n$ of the number of nitrogen atoms in each region was measured, and $R_1$-$R_6$ were all not equal to 0.

Example 11

A difference between Example 11 and Example 1 lied in that, the oxidant was 20 ml of a hydrogen peroxide solution with a concentration of 3%, and other components, use amounts, and preparation methods were the same as Example 1.

The negative electrode material prepared in this example included a core and a coating layer located on at least partial surface of the core. The core included graphite, a graphite surface and the coating layer contained nitrogen atoms, and the coating layer included hard carbon.

5 negative electrode material particles were randomly acquired, 6 regions were randomly taken from the single negative electrode material particle, energy spectrum signals of nitrogen were respectively detected by a scanning electron microscope energy spectrometer, a proportion $R_n$ of the number of nitrogen atoms in each region was measured, and $R_1$-$R_6$ were all not equal to 0.

Example 12

A difference between Example 12 and Example 1 lied in that, the nitrogen-containing organic monomer was nitroaniline, and other components, use amounts, and preparation methods were the same as Example 1.

The negative electrode material prepared in this example included a core and a coating layer located on at least partial surface of the core. The core included graphite, a graphite surface and the coating layer contained nitrogen atoms, and the coating layer included hard carbon.

5 negative electrode material particles were randomly acquired, 6 regions were randomly taken from the single negative electrode material particle, energy spectrum signals of nitrogen were respectively detected by a scanning electron microscope energy spectrometer, a proportion $R_n$ of the number of nitrogen atoms in each region was measured, and $R_1$-$R_6$ were all not equal to 0.

Example 13

A difference between Example 13 and Example 1 lied in that, a maximum heating temperature was 1250°C, and other components, use amounts, and preparation methods were the same as Example 1.

The negative electrode material prepared in this example included a core and a coating layer located on at least partial surface of the core. The core included graphite, a graphite surface and the coating layer contained nitrogen atoms, and the coating layer included hard carbon.

5 negative electrode material particles were randomly acquired, 6 regions were randomly taken from the single negative electrode material particle, energy spectrum signals of nitrogen were respectively detected by a scanning electron microscope energy spectrometer, a proportion $R_n$ of the number of nitrogen atoms in each region was measured, and $R_1$-$R_6$ were all not equal to 0.

Example 14

A difference between Example 14 and Example 1 lied in that, the nitrogen-containing organic monomer was nitroaniline, a sodium hydroxide solution was added to regulate a pH value to 9, and other components, use amounts, and preparation methods were the same as Example 1.

The negative electrode material prepared in this example included a core and a coating layer located on at least partial surface of the core. The core included graphite, a graphite surface and the coating layer contained nitrogen atoms, and the coating layer included hard carbon.

5 negative electrode material particles were randomly acquired, 6 regions were randomly taken from the single negative electrode material particle, energy spectrum signals of nitrogen were respectively detected by a scanning electron microscope energy spectrometer, a proportion $R_n$ of the number of nitrogen atoms in each region was measured, where $R_1$, $R_3$, $R_4$, $R_5$, and $R_6$ were all not equal to 0, and $R_2$ was 0.

Example 15

A difference between Example 15 and Example 1 lied in that, the addition of an sulfamic acid monomer used was 225 g, a maximum heating temperature was 2200°C, and other components, use amounts, and preparation methods were the same as Example 1.

The negative electrode material prepared in this example included a core and a coating layer located on at least partial surface of the core. The core included graphite, a graphite surface and the coating layer contained nitrogen atoms, and the coating layer included hard carbon.

5 negative electrode material particles were randomly acquired, 6 regions were randomly taken from the single negative electrode material particle, energy spectrum signals of nitrogen were respectively detected by a scanning electron microscope energy spectrometer, a proportion $R_n$ of the number of nitrogen atoms in each region was measured, and $R_1$-$R_6$ were all not equal to 0.

Comparative example 1

(1) 500 g of graphite and 1000 ml of deionized water were uniformly mixed, a hydrochloric acid solution was added to regulate a pH value to 5, the mixed liquid was placed under a 4°C water bath condition and vigorously stirred, and an intermediate product was obtained through solid-liquid separation.

(2) Under a nitrogen atmosphere, the intermediate product was heated to 1150°C, and then carbonized for 4 hours, so as to obtain a negative electrode material. The negative electrode material prepared in this comparative example included the graphite.

5 negative electrode material particles were randomly acquired, 6 regions were randomly taken from the single negative electrode material particle, energy spectrum signals of nitrogen were respectively detected by a scanning electron microscope energy spectrometer, a proportion $R_n$ of the number of nitrogen atoms in each region was measured, and $R_1$-$R_6$ were all equal to 0.

Comparative example 2

A difference between this comparative example and Example 1 lied in that, when step (2) was performed, an ammonium persulfate solution was not added, and other components, use amounts, and preparation methods were the same as Example 1.

The negative electrode material prepared in this comparative example included a core and a coating layer located on at least partial surface of the core. The core included the graphite, and the coating layer included a polymer.

5 negative electrode material particles were randomly acquired, 6 regions were randomly taken from the single negative electrode material particle, energy spectrum signals of nitrogen were respectively detected by a scanning electron microscope energy spectrometer, a proportion $R_n$ of the number of nitrogen atoms in each region was measured, where $R_1$, $R_4$, $R_5$, and $R_6$ were all not equal to 0, and $R_2$ and $R_2$ were 0.

Comparative example 3

(1) Similar to Example 7, 500 g of artificial graphite (D50=25 $\mu$m) and 1000 ml of deionized water were uniformly mixed, a hydrochloric acid solution was added to regulate a pH value to 5, the mixed liquid was placed under a 4°C water bath condition and vigorously stirred, and an intermediate product was obtained through solid-liquid separation.

(2) Under a nitrogen atmosphere, the intermediate product was heated to 1150°C, and then carbonized for 4 hours, so as to obtain a negative electrode material.

The negative electrode material prepared in this comparative example included the graphite.

5 negative electrode material particles were randomly acquired, 6 regions were randomly taken from the single negative electrode material particle, energy spectrum signals of nitrogen were respectively detected by a scanning electron microscope energy spectrometer, a proportion $R_n$ of the number of nitrogen atoms in each region was measured, and $R_1$-$R_6$ were all equal to 0.

Test method

(1) Method for testing average particle size of negative electrode material:
A particle size distribution range of the negative electrode material was tested by a Malvern laser particle analyzer.

(2) Method for testing tap density of negative electrode material:
The negative electrode material was placed in a tap density meter sample bin, vibration was performed for 1000 times, sample volumes were recorded, and the tap density was calculated according to a mass-volume ratio.

(3) Method for testing specific surface area of negative electrode material:
At constant temperature and low temperature, adsorption capacities of gases with different relative pressures on a surface of a solid were determined, and then an adsorption capacity of a single molecule layer of a sample was solved based on a Brunauer-Emmett-Teller adsorption theory and a formula (BET formula) thereof, so as to calculate the specific surface area of the material.

(4) Observation of microscopic morphology of surfaces of negative electrode material particles:

An S-4800 scanning electron microscope was used to observe the microscopic morphology of the surface of the negative electrode material.

(5) Method for testing content of nitrogen on negative electrode material particles:

Accessories of an energy spectrometer of the scanning electron microscope were used to test the content of nitrogen on graphite single particles.

(6) Method for testing uniformity A of nitrogen doping of negative electrode material:

5 negative electrode material particles were randomly acquired, n 1 $\mu$m*1 $\mu$m regions were randomly taken from the single negative electrode material particle, energy spectrum signals of nitrogen are respectively detected by a scanning electron microscope energy spectrometer, a proportion of the number of nitrogen atoms in each region was measured, and an average value of the proportions of the number of nitrogen atoms was calculated as R.

The uniformity $A = \sum_{i=1}^{n}(R_n - R)^2/n$, where $R_n$ indicated the proportion of the number of nitrogen atoms measured in a nth region, n was a natural number $\geq 5$, and the uniformity A was calculated.

(7) Testing for powder conductivity:

A resistivity tester (ST-2255A of Suzhou Jingge Electronics) was used, 5 g of a powder sample was taken and pressed to 8000 kg$\pm$2 kg at a constant pressure by an electronic press machine for 15-25 s, the sample was placed between electrodes of a tester, a height of the sample was h(cm), voltages on two ends were U, a current was I, resistance was R(K$\Omega$), an area after powder compacting was S=3.14 cm$^2$, the powder conductivity was calculated according to a formula $\delta$=h/(S*R)/1000, in S/m.

(8) Testing for electrochemical performance

The negative electrode materials were prepared in the examples and comparative examples, the negative electrode material, carboxymethyl cellulose, and styrene butadiene rubber were respectively dissolved in deionized water according to a mass ratio of 96.5:1.5:1, a solid content was controlled to be 50%, the mixture was coated on a copper foil current collector, and vacuum drying was performed to prepare a negative electrode plate; and a metallic lithium sheet was used as a counter electrode, and a button battery was assembled in a glove box filled with argon. At a current density of 0.1 C, a charging and discharging test was performed according to a charging and discharging interval being 0.01-1.5 V. Charging and discharging was cycled to obtain a first reversible specific capacity, a first cycle charging capacity, and a first cycle discharging capacity. Initial coulombic efficiency=first cycle discharging capacity/first cycle charging capacity.

Results of the performance test were as follows.

Table 1 Performance parameters of negative electrode material prepared in examples and comparative examples and battery thereof

| Sample | Uniformity A | Nitrogen content (%) | Particle size D50 ($\mu$m) | $\rho2/\rho1$ | Specific surface area (m$^2$/g) | Reversible specific capacity (mAh/g) | Initial coulombic efficiency (%) |
|---|---|---|---|---|---|---|---|
| Example 1 | 0.10 | 0.0530 | 17.7 | 1.71 | 3.94 | 365.7 | 94.3 |
| Example 2 | 0.07 | 0.0983 | 17.9 | 2.24 | 3.47 | 367.6 | 93.3 |
| Example 3 | 0.08 | 0.1367 | 17.5 | 2.64 | 3.20 | 368.1 | 92.7 |
| Example 4 | 0.07 | 0.0325 | 17.5 | 3.07 | 3.63 | 365.3 | 94.3 |
| Example 5 | 0.09 | 0.0464 | 18.1 | 1.41 | 3.84 | 366.6 | 94.2 |
| Example 6 | 0.11 | 0.0545 | 2.0 | 1.71 | 2.32 | 352.0 | 95.2 |
| Example 7 | 0.10 | 0.0541 | 25.0 | 1.82 | 1.78 | 353.2 | 95.7 |
| Example 8 | 0.12 | 0.0017 | 17.6 | 1.02 | 5.53 | 363.4 | 93.6 |
| Example 9 | 0.18 | 0.4132 | 17.9 | 3.96 | 2.65 | 369.2 | 93.8 |

(continued)

| Sample | Uniformity A | Nitrogen content (%) | Particle size D50 (µm) | ρ2/ρ1 | Specific surface area (m²/g) | Reversible specific capacity (mAh/g) | Initial coulombic efficiency (%) |
|---|---|---|---|---|---|---|---|
| Example 10 | 0.10 | 0.0534 | 17.7 | 1.70 | 3.92 | 366.2 | 94.2 |
| Example 11 | 0.09 | 0.0520 | 17.7 | 1.68 | 3.87 | 365.7 | 94.3 |
| Example 12 | 0.19 | 0.0502 | 17.6 | 1.73 | 4.03 | 365.1 | 94.3 |
| Example 13 | 0.10 | 0.0495 | 17.8 | 1.67 | 3.72 | 364.8 | 94.5 |
| Example 14 | 0.45 | 0.0237 | 17.7 | 1.52 | 3.98 | 364.2 | 93.1 |
| Example 15 | 0.11 | 0.0102 | 17.7 | 1.72 | 2.01 | 363.2 | 96.1 |
| Comparative example 1 | - | 0 | 17.2 | 1.00 | 7.19 | 361.1 | 92.3 |
| Comparative example 2 | 0.82 | 0.0331 | 18.7 | 0.95 | 6.37 | 361.3 | 92.6 |
| Comparative example 3 | -- | 0 | 25.0 | 1.00 | 1.86 | 349.7 | 95.5 |

From Table 1, it might be learned that, according to test data of Examples 1-12, it might be learned that, by performing the polymerization reaction on the mixed solution containing the graphite, the nitrogen-containing organic monomer, and the oxidant, the nitrogen-containing polymer formed through polymerization of the nitrogen-containing organic monomer was wrapped around the surface of the graphite, and the negative electrode material in which nitrogen was uniformly doped was obtained by carbonizing the nitrogen-containing polymer. A in situ polymerization reaction under a mild condition was used to uniformly introduce nitrogen-containing organic monomer molecules into surfaces of graphite particles, such that the uniformity of nitrogen doping on the surfaces of the graphite particles might be improved. The specific surface area of the negative electrode material was controlled within an appropriate range, such that an irreversible reaction between the negative electrode material and the electrolyte in a first cycle process was reduced, thereby increasing the reversible capacity of the battery. The uniform doping of the nitrogen atoms could also adjust an energy band structure of the graphite material, such that initial coulombic efficiency is improved.

Compared to Example 1, according to the negative electrode material prepared in Example 14, the proportion of the number of nitrogen atoms in one of n unit regions randomly selected was zero, indicating that the uniformity of nitrogen doping on the graphite surface was relatively poor, and the capacity and initial coulombic efficiency of the negative electrode material also reduced compared to Example 1.

Compared to Example 1, in Comparative example 1, during the preparation of the negative electrode material, the nitrogen-containing organic monomer was not added to the mixed solution, and the capacity of the graphite negative electrode material prepared was only 361.1 mAh/g (Comparative example 1). The performance of a product was difficult to improve, causing the reversible capacity and initial coulombic efficiency of the battery to reduce compared to Example 1. Therefore, it might be learned that, by adding suitable amount of the nitrogen-containing organic monomer, the nitrogen-containing polymer formed through polymerization was wrapped around the surfaces of the graphite particles, and the capacity and initial coulombic efficiency of the graphite negative electrode material obtained were higher.

Compared to Example 2, in Comparative example 2, during the preparation of the graphite negative electrode material, oxidation was not performed, nitrogen content of the negative electrode material prepared reduced, and the uniformity was relatively poor. However, due to the presence of the polymer coating layer, the conductivity of the negative electrode material reduced, the specific capacity of the battery was slightly reduced to 361.3 mAh/g, and the initial coulombic efficiency was also slightly reduced to 92.6%.

Compared to Example 7, in Comparative example 3, during the preparation of the graphite negative electrode material, the artificial graphite was used as a raw material, the nitrogen-containing organic monomer was not added to the mixed solution, the capacity of the graphite negative electrode material prepared was reduced to 349.7 mAh/g (Comparative example 3) compared to Example 1, and the capacity and initial coulombic efficiency of the negative electrode material both slightly reduced.

Although the present disclosure is disclosed as above with preferred embodiments, it is not intended to limit the claims, and any one skilled in the art may make a number of possible changes and modifications without departing from the conception of the present disclosure, and therefore the scope of protection of the present disclosure should be based on the scope defined in the claims of the present disclosure.

**Claims**

1. A negative electrode material, comprising a core and a coating layer located on at least partial surface of the core, wherein the negative electrode material is doped with nitrogen atoms;

   uniformity of a doping concentration of the nitrogen atoms is A, wherein a uniformity A is obtained by the following test method:
   5 negative electrode material particles are randomly acquired, n 1 $\mu$m*1 $\mu$m regions are randomly taken from a single negative electrode material particle, energy spectrum signals of nitrogen are respectively detected by a scanning electron microscope energy spectrometer, a proportion of the number of nitrogen atoms in each region is measured, and an average value of the proportions of the number of nitrogen atoms is calculated as R; and

   the uniformity $A = \sum_{i=1}^{n}(R_n - R)^2/n$ , and A≤0.5, wherein $R_n$ indicates the proportion of the number of nitrogen atoms measured in a nth region, and n is a natural number ≥5.

2. The negative electrode material according to claim 1, wherein the core comprises graphite, the coating layer comprises a carbon material, and a surface of the graphite and/or the coating layer comprises the nitrogen atoms.

3. The negative electrode material according to claim 1, wherein powder conductivity of the core is $\rho 1$, powder conductivity of the negative electrode material is $\rho 2$, and 1.01≤$\rho 2/\rho 1$≤10.

4. The negative electrode material according to claim 1, wherein meeting at least one of the following features:

   (1) the $R_n$ is not equal to zero;
   (2) the core comprises at least one of artificial graphite or natural graphite;
   (3) a thickness of the coating layer is 1 nm-100 nm; and
   (4) a mass content of nitrogen atoms in the negative electrode material is 0.01%-3%.

5. The negative electrode material according to any one of claims 1 to 4, wherein meeting at least one of the following features:

   (1) a specific surface area of the negative electrode material is 0.1 m$^2$/g-5 m$^2$/g;
   (2) a median particle size of the negative electrode material is 1 $\mu$m-30 $\mu$m;
   (3) a tap density of the negative electrode material is 0.75 g/cm$^3$-1.1 g/cm$^3$;
   (4) the coating layer comprises at least one of hard carbon, soft carbon, or graphite carbon; and
   (5) a mass content of the coating layer in the negative electrode material is 0.1%-10%.

6. A method for preparing a negative electrode material, comprising the following steps:

   performing a polymerization reaction on a mixed solution containing graphite, a nitrogen-containing organic monomer, and an oxidant, so as to obtain a precursor; and
   carbonizing the precursor to obtain a negative electrode material.

7. The preparation method according to claim 6, wherein meeting at least one of the following features:

   (1) the graphite comprises at least one of artificial graphite or natural graphite;
   (2) a median particle size of the graphite is 1 $\mu$m-30 $\mu$m;
   (3) the nitrogen-containing organic monomer comprises at least one of n-methylaniline, sulfamic acid, aminosalicylic acid, aminoterephthalic acid, aniline, diphenylamine, phenylenediamine, triphenylamine, n-ethylaniline, or nitroaniline;
   (4) the oxidant comprises at least one of ammonium persulfate, a hydrogen peroxide solution, ferric chloride, or aluminum chloride;
   (5) a mass concentration of the oxidant in the mixed solution is 0.1 mol/L-2 mol/L;
   (6) a mass ratio of the graphite to the nitrogen-containing organic monomer is 100:(0.1-45);
   (7) a time for the polymerization reaction is 1 h-30 h;
   (8) a temperature for the polymerization reaction is 1°C-95°C;
   (9) the polymerization reaction is performed in a stirring state;
   (10) the polymerization reaction is performed in a stirring state, and a stirring rate is 50 r/min-800 r/min; and

(11) a nitrogen-containing polymer formed through polymerization of the nitrogen-containing organic monomer is wrapped around a surface of the graphite.

8. The preparation method according to claim 6, wherein the step of performing the polymerization reaction on the mixed solution containing the graphite, the nitrogen-containing organic monomer, and the oxidant comprises: first preparing mixed liquid containing the graphite, a pH regulator, and the nitrogen-containing organic monomer, and adding the oxidant to the mixed liquid, so as to obtain the mixed solution.

9. The preparation method according to claim 8, wherein meeting at least one of the following features:

(1) pH of the mixed liquid is 1-10;
(2) the pH regulator comprises at least one of an acidic pH reagent or an alkaline pH reagent;
(3) the pH regulator comprises at least one of hydrochloric acid, sulfuric acid, phosphoric acid, or nitric acid; and
(4) the pH regulator comprises at least one of lithium hydroxide, sodium hydroxide, potassium hydroxide, sodium carbonate, or sodium bicarbonate.

10. The preparation method according to any one of claims 6 to 8, wherein meeting at least one of the following features:

(1) carbonization is performed under a protective atmosphere;
(2) the protective atmosphere comprises at least one of nitrogen, helium, neon, argon, krypton, or xenon;
(3) a carbonization temperature is 500°C-2500°C;
(4) a heating rate of carbonization is 0.5°C/min-5.0°C/min; and
(5) a temperature-holding time for carbonization is 1 h-20 h.

11. A battery, comprising the negative electrode material according to any one of claims 1 to 5 or a negative electrode material prepared by the method for preparing a negative electrode material according to any one of claims 6 to 10.

FIG. 1

a polymerization reaction is performed on a mixed solution containing graphite, a nitrogen-containing organic monomer, and an oxidant, so as to obtain a precursor ⟋ S10

the precursor is carbonized to obtain a negative electrode material ⟋ S20

FIG. 2a

FIG. 2b

FIG. 3

| Region | A proportion of the number of nitrogen atoms |
|---|---|
| 1 | 5.87 |
| 2 | 5.49 |
| 3 | 5.93 |
| 4 | 5.52 |
| 5 | 5.50 |
| 6 | 5.11 |

# EP 4 567 930 A1

<table>
<tr><td colspan="2" style="text-align:center"><strong>INTERNATIONAL SEARCH REPORT</strong></td><td>International application No.<br><strong>PCT/CN2024/073311</strong></td></tr>
</table>

**A. CLASSIFICATION OF SUBJECT MATTER**

H01M 4/38(2006.01)i; H01M 4/62(2006.01)i; H01M 10/0525(2010.01)i

According to International Patent Classification (IPC) or to both national classification and IPC

**B. FIELDS SEARCHED**

Minimum documentation searched (classification system followed by classification symbols)

CPC/IPC: H01M

Documentation searched other than minimum documentation to the extent that such documents are included in the fields searched

Electronic data base consulted during the international search (name of data base and, where practicable, search terms used)

CNTXT, WPABS, ENTXTC, DWPI, VEN, CNKI: 电池, 负极片, 内核, 包覆层, 均匀度, battery, cathode material, inner core, carbon coating layer, uniformity

**C. DOCUMENTS CONSIDERED TO BE RELEVANT**

| Category* | Citation of document, with indication, where appropriate, of the relevant passages | Relevant to claim No. |
|---|---|---|
| PX | CN 116979056 A (BTR NEW MATERIALS GROUP CO., LTD.) 31 October 2023 (2023-10-31)<br>claims 1-9 | 1-11 |
| X | CN 113889596 A (LUOYANG YUEXING NEW ENERGY TECHNOLOGY CO., LTD.) 04 January 2022 (2022-01-04)<br>description, paragraphs 6-10 | 1-11 |
| X | CN 114050243 A (BOERTE NEW MATERIALS (YINCHUAN) CO., LTD.) 15 February 2022 (2022-02-15)<br>description, paragraphs [0006]-[0033] | 1-11 |
| A | CN 114497546 A (BTR NEW MATERIALS GROUP CO., LTD.) 13 May 2022 (2022-05-13)<br>description, paragraphs 6-50 | 1-11 |
| A | CN 116314638 A (BTR NEW MATERIALS GROUP CO., LTD.) 23 June 2023 (2023-06-23)<br>description, paragraphs 6-45 | 1-11 |
| A | JP 2011243567 A (JFE CHEMICAL CORP.) 01 December 2011 (2011-12-01)<br>description, paragraphs 13-38 | 1-11 |

☑ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **01 April 2024** | **06 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/073311** |

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 2019087519 A (TODAKOGYO CORP.) 06 June 2019 (2019-06-06) description, embodiments 1-8 | 1-11 |

Form PCT/ISA/210 (second sheet) (July 2022)

EP 4 567 930 A1

**INTERNATIONAL SEARCH REPORT**
Information on patent family members

International application No.

**PCT/CN2024/073311**

| Patent document cited in search report | | | Publication date (day/month/year) | Patent family member(s) | | | Publication date (day/month/year) |
|---|---|---|---|---|---|---|---|
| CN | 116979056 | A | 31 October 2023 | None | | | |
| CN | 113889596 | A | 04 January 2022 | None | | | |
| CN | 114050243 | A | 15 February 2022 | None | | | |
| CN | 114497546 | A | 13 May 2022 | None | | | |
| CN | 116314638 | A | 23 June 2023 | None | | | |
| JP | 2011243567 | A | 01 December 2011 | None | | | |
| JP | 2019087519 | A | 06 June 2019 | JP | 6977491 | B2 | 08 December 2021 |

Form PCT/ISA/210 (patent family annex) (July 2022)

**EP 4 567 930 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311076468